# EUROPÄISCHE PATENTSCHRIFT

(11) **EP 1 496 387 B1**
(45) Veröffentlichungstag und Bekanntmachung des Hinweises auf die Patenterteilung: **01.10.2008**
(21) Anmeldenummer: 04015826.3
(22) Anmeldetag: 06.07.2004
(51) Int. Cl.: G02B 21/36, G02B 21/00

(54) **Verfahren zum Betrieb eines Laser-Scanning-Mikroskops, wobei Bilder einer Probe verglichen und aus dem Ergebnis Steuersignale abgeleitet werden**
Method of operating a laser scanning microscope comprising the steps of comparing images of a sample and generating control signals in response to the result of this comparison
Procédé d'exploitation d'un microscope à balayage laser comprenant les étapes de comparaison d' images d'un échantillon et de génération de signaux de contrôle selon le résultat de la comparaison

(30) Priorität: 11.07.2003 DE 10332060
(43) Veröffentlichungstag der Anmeldung: 12.01.2005
(73) Patentinhaber: Carl Zeiss MicroImaging GmbH, 07745 Jena (DE)
(72) Erfinder: Engelmann, Ralf, 07743 Jena (DE); Engel, Jörg, 07570 Weida (DE)
(74) Vertreter: Hampe, Holger

(56) Entgegenhaltungen:
- EP-A- 1 178 345
- DE-A- 19 829 981
- US-A1- 2002 015 516
- US-A1- 2002 162 955
- US-A1- 2003 044 054
- US-B1- 6 400 502
- US-B1- 6 462 771

## Beschreibung

Die Erfindung betrifft eine schnelle, quasi in Echtzeit stattfindende Veränderung der Abtastung insbesondere lebender Proben durch ein Laser - Scanning - Mikroskop.

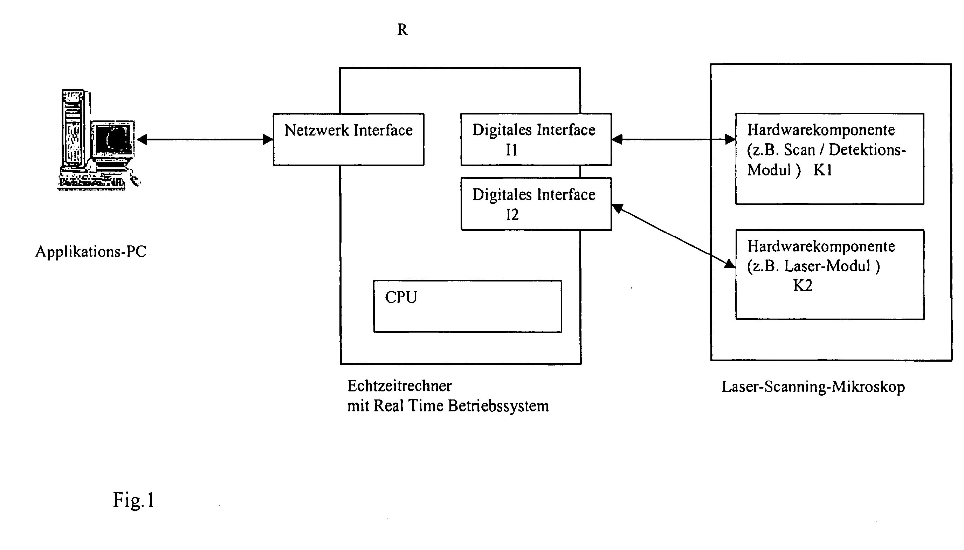

Die wichtigsten vorteilhaft zusammenwirkenden Systemkomponenten sind in Fig.1 dargestellt.

Zur Darstellung der optischen Komponenten eines Laser -Scanning - Mikroskops wird beispielhaft auf DE19702753 A1 verwiesen.

In Fig.1 sind beispielhaft unterschiedliche optische und elektronische Komponenten K1 und K2 dargestellt.

K1 kann beispielsweise das Detektionsmodul oder die Scanneransteuerung sein, K2 das Beleuchtungsmodul mit mindestens einem Beleuchtungslaser und einem AOTF zur schnellen wellenlängenabhängigen Umschaltung bzw. Intensitätsänderung des Beleuchtungslichtes.

Ein Laser - Scanning- Mikroskop mit schneller Umschaltung unterschiedlicher Wellenlängen und/ oder Intensitäten für unterschiedliche Probenbereiche ist in DE 19829981 beschrieben.

In EP 1178345 A1 wird die spektrale Detektion während des Rastervorganges verändert, um einen bestimmten Bereich mit verschiedenen Wellenlängen zu erfassen.

US2002015516 beschreibt ein automatisches Mikroskop das bei Auftreten von Abweichungen zwischen zwei Bildern von Gewebeschnitten auf einen Videokonferenz- Übertragungsmodus umschaltet.

Auf folgende Begriffe wird sinngemäß im Folgenden Bezug genommen:
- Probe: Präparat als Gesamteinheit
- Probenbereich: Teile der Probe, die z.B. in einem Bild erfasst werden können
- Bild: Abbildung des Präparats in Teilen oder als Ganzes
- Bildbereich: Teilbereich eines grösseren Bildes
- Objekt: abgegrenzte Struktur innerhalb eines Bildbereiches, z.B. eine biologische Zelle, die untersucht werden soll
- ROI: (engl.) anwenderdefinierte Region des Interesses, siehe auch Bildbereich
- Scanfeld: technisch definierter Bildbereich; die nichtabgebildete Umgebung des Scanfeldes wird dabei weder passiv noch aktiv abgetastet.
- Scanzeile: lineare Zeile beliebiger Länge; durch orthogonal gestaffelte Aneinanderreihung von Zeilen entsteht das Scanfeld.

Die Komponenten K1, K2 in der Darstellung und weitere, nicht dargestellte Komponenten sind über digitale Interface I1, I2 mit einem Rechner R verbunden, der vorteilhaft einen CPU-Prozessor beinhaltet.
Der Rechner R ist mit einem Anwender-PC verbunden, der Anzeige- und
Eingabemittel für den Benutzer des Laser-Scanning-Mikroskops beinhaltet.

Erfindungsgemäß reagiert das Scansystem auf Ereignisse, die sich auf oder in der Probe ereignen.
Hierzu werden nacheinander aufgenommene Bilder oder Bildbereiche miteinander verglichen und spektrale oder Intensitätsänderungen erfaßt und zur Steuerung der Geräteparameter herangezogen.
Dies kann in einem Fall erfolgen, indem die Scangeschwindigkeit erhöht wird, um schnell ablaufende Ereignisse besser und genauer erfassen zu können. Hierbei kann die Auflösung verringert werden.

In einem anderen Fall kann auf eine Veränderung der Helligkeit in der Probe, beispielsweise dem Ausbleichen der Probe durch die Laserbestrahlung reagiert werden, indem die Empfindlichkeit erhöht wird.

In einem weiten Fall können periodisch ablaufende Vorgänge erfaßt und die Bildaufnahme hiermit zeitlich synchronisiert werden. Diese Vorgänge können im Bild oder auch extern stattfinden (z. B. Pulsschlag etc.).

In einem weiteren Fall können gleichförmige Bewegungen der Probe, beispielsweise einer Zelle in einer Flüssigkeit, erfaßt und der gesamte Bildaufnahmebereich in der Probe nachgeführt werden.

Der Bildaufnahmebereich kann auch an eine bestimmte Probenform angepaßt und mit der Veränderung der Probenform verändert werden (ROI, region of interest). Die Abtastung erfolgt vorteilhaft durch Steuerung der Scanner nur innerhalb der ROI.

Eine Veränderung wie ein Helligkeitsimpuls oder ein Lichtblitz, der den Beginn einer Reaktion in der Probe ankündigt, kann als Startsignal zur Auslösung einer Aufnahme oder Aufnahmenserie mit vordefinierten Aufnahmebedingungen und Scanparametern dienen.

Eine Veränderung in einem Probenbereich kann zur Umschaltung zwischen einem großen Übersichtsbild mit möglicherweise geringer Auflösung zu einem kleineren Bildausschnitt mit höherer Auflösung führen, der nur den aktiven Probenbereich erfaßt.

Die Geschwindigkeit eines in der Probe ablaufenden Prozesses kann zur Anpassung der Scangeschwindigkeit herangezogen werden, um schnell ablaufende Ereignisse hinreichend zeitlich aufgelöst erfassen zu können, wobei möglicherweise die räumliche Auflösung entsprechend herabgesetzt werden kann. Während der Bilddaten-Aufnahme wird von dem Echtzeitsystem, das die Aufnahme steuert, in geeigneter Weise auf die dynamischen Eigenschaften der Probe reagiert.

Die erzeugten Bilddaten werden analysiert um daraus Steuersignale für die Bilddaten-Aufnahme zu gewinnen. Diese Steuersignale könne auch durch die Kombination mit externen Signalen (Trigger, digitalisierte Parameter) gewonnen werden.

Die Beeinflussung umfaßt mindestens folgende Parameter:
- Größe, Position, Rotation, Zoom des Scanbereiches
- Geschwindigkeit der Datenaufnahme
- Scanmode (Spot, Line, Frame, Stack)
- Anzahl der gescannten Bilder
- Zeit zwischen zwei Datenaufnahmen
- Art der Datenfilterung
- Intensität der Beleuchtung
- Verstärkung des detektierten Signals

Die technologische Voraussetzung für all diese Reaktionen ist ein System wie anhand der Abbildung beschrieben, bestehend aus geeigneten Soft- und Hardwarekomponenten, um die erforderlichen Signale für die veränderte Ansteuerung der Scanner bereits während des laufenden Scanvorganges zu berechnen, z. B. im Fall eines aus Zeilen aufgebauten Scanfeldes: Die Berechnung der Signale für die Ansteuerung der Scanner erfolgt nicht im voraus für den gesamten Scanauftrag, sondern in kleinen Einheiten (Scanzeilen). Während der Messung wird aus dem aktuellen Zustand der Scanner (Position, Geschwindigkeit, Beschleunigung) und der gewünschten Bewegung der Scanner eine neue Scanzeile berechnet. Dadurch kann flexibel und schnell auf neue Anforderungen während der Messung reagiert werden.

### Mögliche applikative Aspekte:

### - Object Tracking mit Scannern

Das interessierende Objekt wird in einem Bild definiert. Wenn sich die Position dieses Objektes während der Bilddaten Aufnahme über einen längeren Zeitraum ändert, wird die Position der Bilddaten Aufnahme nach geregelt. Dies kann in allen 3 Raumkoordinaten erfolgen.

### - Nachregelung der Intensität des gescannten Signals

Ziel ist es, die Intensität des detektierten Signals während der Bilddaten Aufnahme über einen längeren Zeitraum in einem zuvor definierten Bereich konstant zu halten. Wenn sich die Intensität ändert (z. B. durch Ausbleichen des Farbstoffes), so wird auf geeignete Weise darauf reagiert.
- Nachregeln der Beleuchtungsintensität
- Erhöhung der PMT Spannung oder Verstärkung
- Verringerung der Geschwindigkeit der Datenaufnahme
Die Referenz für die Intensität des detektierten Signals kann an einer anderen Stelle der Probe gemessen werden, als in dem Gebiet in dem die eigentliche Messung erfolgt, um so das Ausbleichen der interessanten Strukturen der Probe zu vermeiden.

### - Auslösen der Bildaufnahme durch eine Bildinformation

Die Bilddaten werden ständig in einem in einem definierten Bereich aufgenommen und die Bildinformation analysiert. Ändert sich ein zuvor festgelegter Parameter (z. B. der mittlere Grauwert), wird eine Bilddaten Aufnahme der gesamten Probe ausgelöst.

### - Autofocus mit Scannern

Es wird eine Referenzposition auf der Probe definiert, die zur Bestimmung bzw. Nachregelung der Focusposition herangezogen wird.
Dies Referenzposition kann außerhalb des Scannbereiches liegen, um bei der Nachregelung der Focusposition ein Ausbleichen der interessanten Bereiche der Probe zu vermeiden.
Zur der Nachregelung der Focusposition wird ein relative Abweichung in z-Richtung zu einer meßbaren Referenz in der z-Ebene (z. B. Deckglasreflektion) herangezogen.

### 1.

Eine vorteilhafte Anwendung der Erfindung ist die Reaktion auf gerichtete Lageveränderungen lebender Proben. Hierbei wird entweder die Scanregion nachgeführt oder ein Zoom bzw. Region of Interest (ROI) aktiviert.
- Fenili und De Boni, Brain Res Protoc 11/2003, S. 101-110 beschreiben die mikroskopische Abbildung von lebenden Zellverbänden in Kultur, wobei eine einzelne Zelle auch bei Lageveränderungen dauerhaft hochaufgelöst dargestellt werden muss.
- Trachtenberg et al., Nature 420/2002, S. 751-752 beschreiben die wiederholte Abbildungen von Hirnstrukturen in Langzeitexperimenten von Wochen mit Laserscanning-Mikroskopie, wobei Lageveränderungen der Probe ausgeglichen werden müssen um die abgebildete Struktur beizubehalten bzw. wiederzufinden.

Zimmer et al., IEEE Trans Med. Imaging 10/2002, S. 1212-1221 beschreiben die automatische Erkennung und Verfolgung wandernder lebender Zellen in Kultur durch Nachbearbeitung von Zeitserien-Aufnahmen. Eine direkte Durchführung solcher Korrekturen während der Bildaufnahme wäre vorteilhaft.

### 2.

Eine weitere vorteilhafte Anwendung ist die Synchronisation mit regelmäßigen Lageabweichungen oder interessierenden dynamischen Vorgängen in lebenden Proben. Hierbei wird z. B. der Bildeinzug mit dem Pulsschlag eines lebenden Tieres synchronisiert um die Bildqualität zu verbessern.
- Chen et al., Learn. Mem. 7/2000, S. 433-441 beschreiben die Abbildungen von Hirnstrukturen in Langzeitexperimenten von Stunden oder Tagen mit Laser-Scanning-Mikroskopie, wobei regelmäßige Bewegungen der Probe durch Puls oder Atmung ausgeglichen werden müssen um die abgebildete Struktur beizubehalten.

### 3.

Eine weitere vorteilhafte Anwendung ist die Reaktion auf dynamische Veränderungen lebender Proben, z. B. Anstieg der Ca2+ Konzentration bei Langzeitimaging. Hierbei wird in Abhängigkeit von der zeitlichen Fluoreszenzdynamik der Probe die Scangeschwindigkeit angepasst.
- Woo et al., J. Physiol. 543/2002, S. 439-453 beschreiben die Darstellung von schnellen Ca2+-Vorgängen in Rattenzellen mit schneller Konfokalmikroskopie. Dabei werden aufgrund der Geschwindigkeit sehr große Datensätze erzeugt. Eine Steuerung der Geschwindigkeit der Datenaufzeichnung mit der Dynamik der Vorgänge in der Probe würde ein ökonomisches Datenmanagement bei Langzeitexperimenten erlauben.

Zimmer et al., IEEE Trans Med. Imaging 10/2002, S. 1212-1221 beschreiben die Analyse wandernder lebender Zellen in Kultur durch Zeitserien-Aufnahmen. Eine Anpassung der Aufnahmerate entsprechend der Bewegung der Zellen während der Bildaufnahme wäre vorteilhaft.

### 4.

Eine weitere vorteilhafte Anwendung eines echtzeit-gesteuerten Scanners ist die Reaktion auf schleichende Veränderungen der Bildqualität, z. B. Ausbleichen des Farbstoffes, Schwankungen der Laserleitung, pH-Veränderungen o. ä. Hierbei wird in Abhängigkeit von der globalen Helligkeitsverteilung oder einer Referenzstelle außerhalb der Probe die Detektionsempfindlichkeit angepasst.
- Chen et al., Learn. Mem. 7/2000, S. 433-441 beschreiben die Abbildungen von Hirnstrukturen in Langzeitexperimenten von Stunden oder Tagen mit Laser-Scanning-Mikroskopie, wobei Veränderungen der Lichteffizienz durch Ausbleichen der Farbstoffe oder milieu bedingte Trübung ausgeglichen werden müssen, um Artefakte zu minimieren.
- Fenili und De Boni, Brain Res Protoc 11/2003, S. 101-110 beschreiben die mikroskopische Abbildung von lebenden Zellverbänden in Kultur, wobei eine einzelne Zelle während eines Entwicklungsvorganges hochaufgelöst dargestellt werden muss. Eine Anpassung der Empfindlichkeit gegenüber Fremdeinflüssen wie Laserleistungsschwankungen wäre vorteilhaft.

## Patentansprüche

1. Verfahren zum Betrieb eines Laser- Scanning-Mikroskopes mit einem Beleuchtungsmodul mit mindestens einem Beleuchtungslaser und einem AOTF zur wellenlängenabhängigen Umschaltung oder Intensitätsänderung des Beleuchtungslichtes, einem Detektionsmodul und einer Scanneransteurung,
die zu ihrer Ansteuerung mit einem Rechner verbunden sind, wobei die Abtastung der Probe zeilenweise in einem Scanfeld erfolgt, und während der Abtastung im Scanfeld Bilddaten analysiert und daraus Steuersignale für die Bildaufnahme gebildet werden,
**dadurch gekennzeichnet daß**
eine Änderung der Ansteuerung der Scanner erfolgt,
wenn zeitliche und / oder örtliche Veränderungen der Farbe und / oder der Intensität eines Probenbereiches erfasst werden,
wobei
eine Reaktion in der Probe ein Steuersignal für den Beginn einer Bildaufnahme oder Bildaufnahmeserie auslöst,
und die Geschwindigkeit eines in der Probe ablaufenden Prozesses zur Bildung eines Steuersignales für die Veränderung der Scangeschwindigkeit herangezogen wird.

2. Verfahren zum Betrieb eines Laser- Scanning-Mikroskopes nach Anspruch 1, zur Erfassung mindestens einer beweglichen Zelle in einer Zellkultur.

3. Verfahren zum Betrieb eines Laser- Scanning-Mikroskopes nach einem der vorangehenden Ansprüche, zur Erfassung von Himstrukturen in Langzeituntersuchungen.

4. Verfahren zum Betrieb eines Laser- Scanning-Mikroskopes nach einem der vorangehenden Ansprüche, zur Erfassung des Pulsschlages.

5. Verfahren zum Betrieb eines Laser- Scanning-Mikroskopes nach einem der vorangehenden Ansprüche, zur Erfassung der Atmung.

6. Verfahren zum Betrieb eines Laser- Scanning-Mikroskopes nach einem der vorangehenden Ansprüche, zur Erfassung zeitlicher Veränderungen in lebenden Proben, beispielsweise der Veränderung der Ca2+ Konzentration.

7. Verfahren zum Betrieb eines Laser- Scanning-Mikroskopes nach einem der vorangehenden Ansprüche, zur Anpassung an das Ausbleichen von Farbstoffen in der Probe.

8. Verfahren zum Betrieb eines Laser- Scanning-Mikroskopes nach einem der vorangehenden Ansprüche, zur Anpassung an Trübungen in der Probe.

## Claims

1. Method of operating a laser scanning microscope having an illumination module comprising at least one illumination laser and an AOTF for wavelength-dependent switching or changing the intensity of the illumination light, a detection module and a scanner control which for control thereof are connected to a computer, wherein the sample is scanned line by line in a scanning field, and during scanning in the scanning field image data are analysed and control signals for image recording are formed therefrom,
**characterised in that**
a change is performed in the control of the scanners,
if temporal and/or spatial changes in the colour and/or the intensity of a sample region are detected,
wherein
a reaction in the sample triggers a control signal for the commencement of an image recording or of a series of image recordings,
and the speed of a process of forming a control signal which is performed in the sample is utilised for the purpose of changing the scanning speed.

2. Method of operating a laser scanning microscope as claimed in claim 1, for detecting at least one movable cell in a cell culture.

3. Method of operating a laser scanning microscope as claimed in any one of the preceding claims, for detecting brain structures in long-term examinations.

4. Method of operating a laser scanning microscope as claimed in any one of the preceding claims, for detecting pulse beat.

5. Method of operating a laser scanning microscope as claimed in any one of the preceding claims, for detecting respiration.

6. Method of operating a laser scanning microscope as claimed in any one of the preceding claims, for detecting temporal changes in living samples, e.g. the change in Ca2+ concentration.

7. Method of operating a laser scanning microscope as claimed in any one of the preceding claims, for adapting to the bleaching of dyes in the sample.

8. Method of operating a laser scanning microscope as claimed in any one of the preceding claims, for adapting to cloudiness in the sample.

## Revendications

1. Procédé d'exploitation d'un microscope à balayage laser, comprenant un module d'éclairage avec au moins un laser d'éclairage et un AOTF pour la commutation ou la modification d'intensité de la lumière d'éclairage en fonction de la longueur d'onde, un module de détection et une commande de dispositif de balayage, qui sont reliés à un ordinateur pour la commande, dans lequel le balayage de l'échantillon s'effectue ligne par ligne dans un champ de balayage, et pendant le balayage, des données d'image sont analysées dans le champ de balayage et des signaux de commande sont formés à partir de celles-ci pour l'enregistrement d'image, **caractérisé en ce qu'**une modification de la commande du dispositif de balayage est effectuée lorsque des changements temporels et/ou spatiaux de la couleur et/ou de l'intensité d'une zone d'échantillon sont détectés, dans lequel une réaction dans l'échantillon déclenche un signal de commande pour le début d'un enregistrement d'image ou d'une série d'enregistrements d'image, et la vitesse d'un processus se déroulant dans l'échantillon est utilisé pour former un signal de commande pour la modification de la vitesse de balayage.

2. Procédé d'exploitation d'un microscope à balayage laser selon la revendication 1, pour détecter au moins une cellule mobile dans une culture cellulaire.

3. Procédé d'exploitation d'un microscope à balayage laser selon l'une quelconque des revendications précédentes, pour détecter des structures cérébrales dans des examens à long terme.

4. Procédé d'exploitation d'un microscope à balayage laser selon l'une quelconque des revendications précédentes, pour détecter le pouls.

5. Procédé d'exploitation d'un microscope à balayage laser selon l'une quelconque des revendications précédentes, pour détecter la respiration.

6. Procédé d'exploitation d'un microscope à balayage laser selon l'une quelconque des revendications précédentes, pour détecter des changements dans le temps dans des échantillons vivants, par exemple le changement de la concentration en Ca2+.

7. Procédé d'exploitation d'un microscope à balayage laser selon l'une quelconque des revendications précédentes, pour une adaptation à la décoloration de colorants dans l'échantillon.

8. Procédé d'exploitation d'un microscope à balayage laser selon l'une quelconque des revendications précédentes, pour une adaptation à des turbidités dans l'échantillon.
